(19) Europäisches Patentamt / European Patent Office / Office européen des brevets

(11) **EP 3 419 946 B1**

(12) **FASCICULE DE BREVET EUROPEEN**

(45) Date de publication et mention de la délivrance du brevet:
**18.08.2021 Bulletin 2021/33**

(21) Numéro de dépôt: **17710356.1**

(22) Date de dépôt: **24.02.2017**

(51) Int Cl.:
***C03C 17/36*** *(2006.01)*

(86) Numéro de dépôt international:
**PCT/FR2017/050411**

(87) Numéro de publication internationale:
**WO 2017/144828 (31.08.2017 Gazette 2017/35)**

(54) **VITRAGE DE CONTRÔLE SOLAIRE COMPRENANT UNE COUCHE D'UN ALLIAGE NICUCR**

SONNENSCHUTZVERGLASUNG MIT EINER SCHICHT AUS EINER NICUCR-LEGIERUNG

SOLAR CONTROL GLAZING COMPRISING A LAYER OF A NICUCR ALLOY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2016 FR 1651625**

(43) Date de publication de la demande:
**02.01.2019 Bulletin 2019/01**

(73) Titulaire: **SAINT-GOBAIN GLASS FRANCE**
**92400 Courbevoie (FR)**

(72) Inventeur: **SINGH, Laura Jane**
**75019 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2011/090784      WO-A1-2013/057425**

**Description**

L'invention se rapporte au domaine des substrats ou articles verriers, en particulier du type vitrage de bâtiments, comprenant à leur surface des revêtements du type couches minces leur conférant des propriétés de contrôle solaire. Un tel vitrage peut également être appliqué dans le domaine de l'automobile. Par vitrage, on entend au sens de la présente invention tout produit verrier constitué par un ou plusieurs substrats verriers, en particulier les simples vitrages, les doubles vitrages, les triples vitrages etc.

De tels vitrages sont munis d'empilements de couches minces qui agissent sur le rayonnement solaire incident par absorption et par réflexion. Ils sont regroupés sous la désignation de vitrage de contrôle solaire. Ils sont utilisés soit essentiellement pour assurer une protection solaire (fonction antisolaire) soit essentiellement pour assurer une isolation thermique de l'habitacle ou de l'habitation (fonction bas émissive).

Par antisolaire, on entend ainsi au sens de la présente invention la faculté du vitrage de limiter le flux énergétique, en particulier le rayonnement Infrarouge (IR) le traversant depuis l'extérieur vers l'intérieur de l'habitation ou de l'habitacle.

Par bas émissif, on entend un vitrage muni d'au moins une couche fonctionnelle lui conférant une émissivité normale $\varepsilon_n$ inférieure à 50%, voire inférieure à 40%, l'émissivité étant définie par la relation :

$$\varepsilon_n = 1 - R_n,$$

dans laquelle $R_n$ est le facteur de réflexion selon la normale (selon l'annexe A de la norme internationale IS 10292) du vitrage.

D'une manière générale, toutes les caractéristiques lumineuses et énergétiques présentées dans la présente description sont obtenues selon les principes et méthodes décrits dans les normes internationales ISO 9050 (2003) et ISO 10292 (1994), se rapportant à la détermination des caractéristiques lumineuses, solaires et énergétiques des vitrages utilisés dans le verre pour la construction.

Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement complexe de couches successives dont les épaisseurs ne dépassent pas quelques nanomètres ou quelques dizaines de nanomètres.

Le plus souvent les empilements en couches minces présentent des propriétés de contrôle solaire essentiellement par les propriétés intrinsèques d'une ou plusieurs couches actives, désignées comme fonctionnelles dans la présente description. Par couche active ou fonctionnelle, on entend ainsi une couche agissant de manière sensible sur le flux de rayonnement solaire traversant ledit vitrage. Une telle couche active, de façon connue, peut fonctionner soit principalement en mode de réflexion du rayonnement infrarouge incident, soit principalement en mode d'absorption dudit rayonnement infrarouge. Le plus souvent, ces couches antisolaires fonctionnent pour partie par réflexion et pour partie par absorption, comme déjà expliqué précédemment.

Notamment, les empilements les plus performants commercialisés à l'heure actuelle incorporent au moins une couche fonctionnelle métallique du type argent fonctionnant essentiellement sur le mode de la réflexion d'une majeure partie du rayonnement IR (infrarouge) incident. Leur émissivité normale ne dépasse pas quelques pourcents. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci pour être protégées de l'humidité. Les empilements selon l'invention ne comprennent pas de telles couches du type argent, ou encore de couches du type or ou platine ou alors en quantités très négligeables, notamment sous formes d'impuretés inévitables.

D'autres couches métalliques à fonction antisolaire ont également été reportées dans le domaine, comprenant des couches fonctionnelles du type Nb, Ta ou W ou des nitrures de ces métaux, tel que décrit par exemple dans la demande WO01/21540. Au sein de telles couches, le rayonnement solaire est cette fois majoritairement absorbé de manière non sélective par la ou les couches fonctionnelles, c'est-à-dire que le rayonnement IR (c'est-à-dire dont la longueur d'onde est compris entre environ 780 nm et 2500 nm) et le rayonnement visible (dont la longueur d'onde est compris entre environ et 380 et 780 nm) sont absorbés sans distinction. Dans de tels vitrages, les valeurs de l'émissivité normale $\varepsilon_n$ sont en général plus élevées. Des valeurs d'émissivité plus faibles peuvent uniquement être obtenues lorsque la couche fonctionnelle est relativement épaisse, en particulier d'au moins 20 nm pour le niobium métallique. En raison de l'absorption non sélective de cette même couche, les coefficients de transmission lumineuse de tels vitrages sont nécessairement très faibles, généralement très inférieurs à 30. Au final, au vu de telles caractéristiques, il n'apparait pas possible d'obtenir à partir de tels empilements des vitrages de contrôle solaire combinant des émissivités normales relativement basses, typiquement inférieures à 50%, et notamment de l'ordre de 40% ou même 35%, tout en conservant une transmission lumineuse suffisamment élevée, c'est à dire typiquement supérieure à 30%.

La publication de brevet EP 747 329 B2 décrit des empilements dont la couche fonctionnelle est constituée par du nickel pur. Le nickel étant un métal ferromagnétique, il s'avère cependant très difficile et couteux de le déposer en couche, à l'échelle industrielle, par les techniques classiques de dépôt du type pulvérisation magnétron (aussi appelé magnetron sputtering selon le terme anglais), incluant la pulvérisation cathodique d'une cible métallique du matériau à déposer, en utilisant les forces d'un champ magnétique.

Pour éviter ce problème, le brevet EP 747 329 B2 indique l'utilisation possible d'alliages comprenant majoritairement du nickel et du chrome, la proportion de Ni étant d'au moins 10% atomique.

La demande EP067257 A1 décrit alternativement l'utilisation comme couche fonctionnelle antisolaire d'un alliage comprenant du nickel et du cuivre, dans des proportions de 1 à 25 pour cent poids de Nickel et 75 à 99% poids de Cuivre.

La demande GB 1309881 décrit un vitrage transparent comprenant une couche fonctionnelle contenant majoritairement du cuivre et 5 à 15% massique de nickel.

La demande de brevet WO2013/057425 décrit des empilements dont les couches fonctionnelles sont à base d'un alliage de cuivre et de nickel, le pourcentage atomique de cuivre étant compris entre 1% et 25% et le pourcentage atomique de Nickel étant compris entre 75% et 99%. Si les vitrages décrits dans cette publication donnent toute satisfaction, l'empilement de contrôle solaire placé sur une surface extérieure doit être de ce fait le plus résistant possible aux agressions chimiques, et en particulier aux attaques acides qui peuvent résulter soit de son exposition à l'air humide ambiant, notamment dans les pays chauds et à forte humidité, soit du nettoyage des vitres par des produits d'entretien, souvent acides. Il est donc utile d'améliorer encore les performances de tels empilements, notamment de résilience aux attaques chimiques, sans pour autant limiter leurs performances optiques.

La publication WO2011/090784 décrit un empilement comprenant une couche fonctionnelle en argent entourée de couches comprenant di nickel et/ou du chrome et/ou du cuivre.

Le but de la présente invention est ainsi de fournir des vitrages comprenant un empilement de couches leur conférant des propriétés de contrôle solaire telles que précédemment décrites, tout en présentant une transmission lumineuse $T_L$ typiquement supérieure à 30%, de préférence supérieure ou égale à 40%, ou même supérieure ou égale à 50%, et une émissivité normale $\varepsilon_n$ faible de préférence inférieure à 50%, voire inférieure à 45% ou même inférieure à 40%, ledit empilement étant durable dans le temps, notamment lorsqu'il est directement disposé sur une face du vitrage exposé vers l'intérieur ou même l'extérieur du bâtiment ou de l'habitacle, sans précaution particulière. Un autre but de la présente invention est de fournir des vitrages antisolaires dont ledit empilement est capable de subir un traitement thermique tel qu'une trempe, un bombage ou plus généralement un traitement thermique à des températures supérieures sans perte de ses propriétés optiques et énergétiques.

Un vitrage selon l'invention permet également de sélectionner le rayonnement le traversant, en favorisant plutôt la transmission des ondes lumineuses, c'est-à-dire dont la longueur d'onde est comprise entre environ 380 et 780 nm et en limitant la traversée du rayonnement infrarouge, dont la longueur d'onde est supérieur à 780 nm.

Selon l'invention, il devient ainsi possible de maintenir une forte illumination de la pièce ou de l'habitacle protégé par le vitrage, tout en minimisant la quantité de chaleur y entrant.

Selon un autre aspect, le vitrage selon la présente invention présente également des propriétés d'isolation thermique grâce aux propriétés bas-émissives de la couche utilisée, permettant de limiter les échanges de chaleur entre l'intérieur et l'extérieur du bâtiment.

Selon un autre avantage de la présente invention, les vitrages munis des empilements selon l'invention sont simples à produire, par rapport à d'autres vitrages connus à propriétés antisolaires, notamment ceux comprenant un empilement à base d'argent.

En outre, ils sont résistants à l'humidité, à la rayure et aux attaques acides.

En particulier, les vitrages selon l'invention présentent une longévité améliorée, dans le sens où leurs propriétés initiales, notamment leur variation de coloration et leurs propriétés d'isolation thermique ou solaire, ne varient que très faiblement sous les agressions chimiques auxquelles ils sont soumis au cours de leur utilisation prévue.

Ils peuvent ainsi être avantageusement être utilisés en temps que vitrage simple (un seul substrat verrier), l'empilement étant préférentiellement tourné vers la face interne du bâtiment ou de l'habitacle à protéger.

Plus précisément, la présente invention se rapporte à un vitrage à propriété de contrôle solaire comprenant au moins un substrat verrier sur lequel est déposé un empilement de couches, ledit empilement comprenant au moins une couche constituée dans un alliage, de préférence métallique, comprenant du nickel, du cuivre et du chrome, alliage dans lequel le pourcentage atomique de nickel est supérieur à 70% et inférieur à 94%, le pourcentage atomique de cuivre est supérieur à 5% et inférieur à 25%, dans lequel le pourcentage atomique de chrome est supérieur à 1% et inférieur à 15% et dans lequel ledit empilement ne comprend pas de couches argent, or ou platine autrement que sous forme d'impuretés inévitables.

Par alliage métallique, on entend que l'alliage contient essentiellement des éléments métalliques et en particulier ne comprend pas d'hétéroatome tel que l'oxygène ou l'azote, autrement que sous forme d'impuretés inévitables. En outre, l'alliage ne contient de préférence pas de carbone autrement que sous forme d'impuretés inévitables.

Au sens de la présente invention, une couche fonctionnelle dans un empilement est à l'origine des propriétés de contrôle solaire du vitrage ou au moins d'une majeure partie de celles-ci.

Selon des modes préférés de réalisation de la présente invention, qui peuvent bien évidemment le cas échéant être combinés entre eux:

- Le pourcentage atomique du cuivre dans l'alliage est supérieur au pourcentage atomique du chrome, de préférence d'au moins 3%, notamment d'au moins 5%.
- Le pourcentage atomique du cuivre dans l'alliage est compris entre 5% et 20%, notamment entre 7 et 15%.
- Le pourcentage atomique du nickel dans l'alliage est compris entre 75% et 90%, notamment entre 78 et 85%.
- Le pourcentage atomique du chrome dans l'alliage est compris entre 2% et 12%, notamment entre 3 et 10%.
- L'épaisseur de ladite couche fonctionnelle est comprise entre 5 et 25 nanomètres, de préférence entre 8 et 15 nanomètres.
- l'alliage est constitué essentiellement du nickel, du cuivre et du chrome, voire ne comprend que du nickel, du cuivre et du chrome, les autres éléments n'étant alors présents que sous forme d'impuretés inévitables.
- L'empilement comprend, ou même est constitué par, la succession des couches suivantes, à partir de la surface du substrat verrier:

  - une ou plusieurs couches inférieures de protection de la couche fonctionnelle contre la migration des ions alcalins issus du substrat verrier, de préférence à base de ou constituée(s) d'un oxyde, d'un nitrure ou d'un oxynitrure, d'épaisseur géométrique, au total, comprise entre 5 et 150 nm,
  - ladite couche fonctionnelle dudit alliage comprenant ou constitué essentiellement par du nickel, du cuivre et du chrome,
  - une ou plusieurs couches supérieures de protection de la couche fonctionnelle contre l'oxygène de l'air, de préférence à base de ou constituée(s) d'un oxyde, d'un nitrure ou d'un oxynitrure, notamment lors d'un traitement thermique tel qu'une trempe ou un recuit, la ou lesdites couches étant d'épaisseur géométrique, au total, comprise entre 5 et 150 nm.

- La ou les couches de protection inférieures et supérieures sont choisies parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$.
- L'empilement comprend la succession des couches suivantes, à partir de la surface du substrat verrier:

  - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
  - ladite couche fonctionnelle dudit alliage comprenant ou constitué essentiellement par du nickel, du cuivre et du chrome,
  - une couche supérieure d'épaisseur comprise entre 5 et 150 nm, de préférence entre 30 et 70 nm, de nitrure de Silicium éventuellement dopé par Al, Zr, B ou de nitrure d'aluminium AlN.

- L'empilement comprend au moins deux couches fonctionnelles dudit alliage comprenant ou constitué essentiellement par du nickel, du cuivre et du chrome tel que précédemment décrit, chacune desdites couches étant séparée dans l'empilement de la suivante par au moins une couche intermédiaire d'un matériau diélectrique.
- Ladite couche intermédiaire comprend au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$.
- l'empilement comprend la succession des couches suivantes, à partir de la surface du substrat verrier :

  - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
  - une première couche fonctionnelle dudit alliage comprenant ou constitué essentiellement par du nickel, du cuivre et du chrome tel que précédemment décrit, l'épaisseur de ladite couche fonctionnelle étant notamment comprise entre 5 et 25 nm, de préférence entre 5 et 10 nm,
  - une couche intermédiaire d'épaisseur comprise entre 5 et 150 nm, de préférence entre 5 et 50 nm, tout particulièrement entre 5 et 15 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$, de préférence de nitrure de silicium éventuellement dopé par Al, Zr, B,
  - une deuxième couche fonctionnelle dudit alliage comprenant ou constitué essentiellement par du nickel, du cuivre et du chrome, l'épaisseur de ladite couche fonctionnelle étant notamment comprise entre 5 et 25 nm, de préférence entre 5 et 10 nm,

- une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

- l'empilement comprend en outre des couches protectrices supplémentaires de la ou des couches fonctionnelles, constituées d'un métal choisi dans le groupe constitué par Ti, Mo, Al ou d'un alliage comprenant au moins l'un de ces éléments, ou encore d'un alliage de nickel et de chrome NiCr, lesdites couches protectrices supplémentaires étant disposées au contact et respectivement au dessus et au dessous de la ou des couches fonctionnelles, et ayant une épaisseur géométrique comprise entre environ 1 nm et environ 5 nm, de préférence entre 1 et 3 nm. De préférence, lesdites couches protectrices supplémentaires sont constituées de Ti ou de NiCr.

Un procédé de fabrication d'un vitrage antisolaire comprend par exemple les étapes suivantes :

- fabrication d'un substrat verrier,
- dépôt sur le substrat verrier d'un empilement de couches par une technique de pulvérisation cathodique sous vide assistée par magnétron, la couche fonctionnelle antisolaire étant obtenue par pulvérisation d'une cible comprenant ou constitué essentiellement par un alliage de nickel, de cuivre et de chrome dans une atmosphère résiduelle d'un gaz neutre tel que l'argon, le pourcentage atomique de nickel étant supérieur à 70% et inférieur à 94%, le pourcentage atomique de cuivre étant supérieur à 5% et inférieur à 25% et le pourcentage atomique de chrome étant supérieur à 1% et inférieur à 15%.

Un procédé de fabrication alternatif d'un vitrage antisolaire comprend par exemple les étapes suivantes :

- fabrication d'un substrat verrier,
- dépôt sur le substrat verrier d'un empilement de couches par une technique de pulvérisation cathodique sous vide assistée par magnétron, la couche fonctionnelle antisolaire étant obtenue par co-pulvérisation d'une cible constituée essentiellement par un alliage de deux des trois métaux décrits précédemment, de préférence un alliage de nickel et de cuivre et d'une cible constituée essentiellement du troisième métal décrit précédemment, de préférence de chrome, dans une atmosphère résiduelle d'un gaz neutre tel que l'argon, les conditions de la pulvérisation desdites deux cibles étant ajustées de tel façon que le pourcentage atomique de nickel dans la couche est supérieur à 70% et inférieur à 94%, le pourcentage atomique de cuivre est supérieur à 5% et inférieur à 25% et le pourcentage atomique de chrome étant supérieur à 1% et inférieur à 15%.

Par l'expression « constitué essentiellement par », on entend au sens de la présente description que l'alliage constituant la couche fonctionnelle comprend uniquement ou très majoritairement les éléments cuivre, nickel et chrome, les autres éléments n'étant alors présents que dans une concentration très mineure n'influant pas ou quasiment pas sur les propriétés recherchées du matériau. Par le terme « impuretés inévitables » on entend ainsi que la présence dans l'alliage de nickel, de cuivre et de chrome de certains éléments supplémentaires, en particulier métalliques, ne peut être évitée en raison typiquement de la présence de ces impuretés dans les sources de cuivre, de nickel et de chrome initialement utilisées ou en raison du mode de dépôt de la couche de nickel, de cuivre et de chrome. Généralement, la proportion atomique de chacun des éléments considérés comme impureté dans l'alliage est inférieure 1%, de préférence est inférieure à 0,5% et de manière très préférée est inférieure à 0,1% atomique.

Les exemples qui suivent sont donnés à titre purement illustratifs et ne limitent sous aucun des aspects décrits la portée de la présente invention. A des fins de comparaison, tous les empilements des exemples qui suivent sont synthétisés sur le même substrat verrier Planilux®. Toutes les couches des empilements ont été déposées selon les techniques classiques bien connues de dépôts sous vide par pulvérisation magnétron.

Exemple 1 (comparatif):

Dans cet exemple conforme à la demande WO2013/057425, on a déposé, selon les techniques magnétrons classiques, sur un substrat en verre du type Planilux® commercialisé par la société déposante, un empilement constitué par la séquence de couches suivantes:

| Verre | $/Si_3N_4$ (60nm) | /NiCr (1nm) | $/Ni_{80}Cu_{20}$* (8nm) | /NiCr (1nm) | $/Si_3N_4$ (34nm) | $/TiO_x$ (9nm) |
|---|---|---|---|---|---|---|

*80% atomique de nickel, 20% atomique de cuivre

Les couches d'oxydes et de nitrures sont obtenues selon les techniques de l'art dans le bâti magnétron. La couche métallique fonctionnelle en NiCu est obtenue par la même technique de pulvérisation magnétron à partir d'une cible constituée par un alliage comprenant environ 80% atomique de Nickel et environ 20% atomique de Cuivre. Aucune difficulté n'a été observée lors du dépôt de la couche par les techniques de pulvérisation assistée par champ magnétique (magnétron).

Il a été vérifié par analyse microsonde de Castaing (aussi appelé EPMA ou electron probe microanalyser selon l'appellation Anglaise) que la composition de la couche métallique finalement obtenue correspond sensiblement à la composition de la cible initiale. Plus précisément, la composition de la couche d'alliage a été préalablement mesurée par EPMA sur une couche unique déposée sur le même substrat.

Le substrat muni de son empilement est ensuite soumis à un traitement thermique consistant en un chauffage à 650°C pendant dix minutes, suivi d'une trempe. Ce traitement est représentatif des conditions subies par le vitrage si celui-ci doit être trempé.

Sur ce vitrage comparatif, on a mesuré le facteur de transmission lumineuse $T_L$ et l'émissivité normale avant et après le traitement thermique, selon les normes précédemment décrites.

Exemple 2 (selon l'invention):

Dans cet exemple selon l'invention, on dépose sur un substrat verre du type Planilux®, le même empilement que pour l'exemple 1, sauf que la couche fonctionnelle est déposée par co-pulvérisation à partir de la cible utilisée dans l'exemple 1 (alliage 80/20 atomique de nickel et de cuivre) et d'une cible supplémentaire en chrome, dans un même compartiment du dispositif magnétron. On ajuste la puissance appliquée sur les deux cathodes pour l'obtention d'une couche fonctionnelle de nickel et de cuivre et d'un faible pourcentage de chrome.

La composition de la couche d'alliage métallique est déterminée par analyse microsonde de Castaing (aussi appelé EPMA ou electron probe microanalyser selon l'appellation Anglaise) selon les mêmes principes que décrit précédemment.

L'empilement déposé est constitué par la séquence de couches suivantes:

| Verre | /$Si_3N_4$ (60nm) | /NiCr (1nm) | /$Ni_{80}Cu_{19}Cr_1$* (8nm) | /NiCr (1nm) | /$Si_3N_4$ (34nm) | /$TiO_x$ (9nm) |
|---|---|---|---|---|---|---|
| *alliage constitué par 80% atomique de nickel, 19% atomique de cuivre et 1% atomique de chrome | | | | | | |

Aucune difficulté n'a été observée lors du dépôt de la couche par les techniques du magnétron, malgré la forte concentration de Nickel dans l'alliage.

Comme pour l'exemple 1, le substrat muni de son empilement est ensuite soumis à un traitement thermique consistant en un chauffage à 650°C pendant dix minutes suivi d'une trempe.

Sur ce vitrage selon l'invention, on mesure dans les mêmes conditions que précédemment le facteur de transmission lumineuse $T_L$ et l'émissivité normale avant et après le traitement thermique, selon les normes précédemment décrites.

Exemple 3 (selon l'invention):

Dans cet exemple, on pratique de façon identique à l'exemple 2 pour l'obtention d'un empilement sensiblement identique par la technique de pulvérisation magnétron, mais on fait varier les puissances exercées sur les deux cibles lors de la co-pulvérisation, de manière à augmenter le taux de chrome dans l'alliage.

La composition de la couche d'alliage métallique est déterminée par analyse microsonde de Castaing comme indiqué précédemment.

L'empilement déposé est cette-fois constitué par la séquence de couches suivantes:

| Verre | /$Si_3N_4$ (60nm) | /NiCr (1nm) | /$Ni_{76}Cu_{18}Cr_6$* (8nm) | /NiCr (1nm) | /$Si_3N_4$ (34nm) | /$TiO_x$ (9nm) |
|---|---|---|---|---|---|---|
| *alliage constitué par 76% atomique de nickel, 18% atomique de cuivre et 6% atomique de chrome | | | | | | |

Comme pour l'exemple 1, le substrat muni de son empilement est ensuite soumis à un traitement thermique consistant en un chauffage à 650°C pendant dix minutes suivi d'une trempe.

Sur ce vitrage selon l'invention, on mesure dans les mêmes conditions que précédemment le facteur de transmission lumineuse $T_L$ et l'émissivité normale avant et après le traitement thermique, selon les normes précédemment décrites.

Exemple 4 (selon l'invention):

Dans cet exemple, on pratique de façon identique à l'exemple 3 pour l'obtention d'un empilement sensiblement identique par la technique de pulvérisation magnétron, mais on augmente encore la puissance exercée sur la cible en chrome lors de la co-pulvérisation des deux cibles, de manière à augmenter encore le taux de chrome dans l'alliage.
La composition de la couche d'alliage métallique est également déterminée par analyse microsonde de Castaing comme indiqué précédemment.
L'empilement déposé est cette-fois constitué par la séquence de couches suivantes:

Verre  /$Si_3N_4$ (60nm)  /NiCr (1nm)  /$Ni_{73}Cu_{17}Cr_{10}$* (8nm)  /NiCr (1nm)  /$Si_3N_4$ (34nm)  /$TiO_x$ (9nm)

*alliage constitué par 73% atomique de nickel,
17% atomique de cuivre et 10% atomique de chrome

Exemple 5 (comparatif):

Dans cet exemple selon l'invention, on dépose sur un substrat verre du type Planilux®, le même empilement que pour l'exemple 1, sauf que la couche fonctionnelle est déposée par co-pulvérisation à partir de la cible utilisée dans l'exemple 1 (alliage 80/20 atomique de nickel et de cuivre) et d'une cible en molybdène, dans un même compartiment du dispositif magnétron. On ajuste la puissance appliquée sur les deux cathodes pour l'obtention d'une couche fonctionnelle de nickel et de cuivre et d'un faible pourcentage de molybdène.
La composition de la couche d'alliage métallique est là encore déterminée par analyse microsonde de Castaing.
L'empilement déposé est constitué par la séquence de couches suivantes:

Verre  /$Si_3N_4$ (60nm)  /NiCr (1nm)  /$Ni_{77}Cu_{16}Mo_7$* (8nm)  /NiCr (1nm)  /$Si_3N_4$ (34nm)  /$TiO_x$ (9nm)

*alliage constitué par 77% atomique de nickel,
16% atomique de cuivre et 7% atomique de molybdène

Comme pour les exemples précédents, le substrat muni de son empilement est ensuite soumis à un traitement thermique consistant en un chauffage à 650°C pendant dix minutes suivi d'une trempe.
Sur ce vitrage selon l'invention, on mesure dans les mêmes conditions que précédemment le facteur de transmission lumineuse $T_L$ et l'émissivité normale avant et après le traitement thermique, selon les normes précédemment décrites.
Les valeurs des mesures effectuées sur les échantillons selon les exemples 2 à 4 selon l'invention et selon les exemples comparatifs 1 et 5 sont regroupés dans le tableau 1 ci-dessous :

Tableau 1

|  | Exemple 1 | Exemple2 | Exemple3 | Exemple4 | Exemple5 |
|---|---|---|---|---|---|
| Couche fonctionnelle | $Ni_{80}Cu_{20}$ | $Ni_{80}Cu_{19}Cr_1$ | $Ni_{76}Cu_{18}Cr_6$ | $Ni_{73}Cu_{17}Cr_{10}$ | $Ni_{75}Cu_{16}Mo_9$ |
| Epaisseur couche active (nm) | 8 | 8 | 8 | 8 | 8 |
| $T_L$ (%) après trempe | 52 | 52 | 51 | 50 | 49 |
| $\varepsilon_N$ (%) après trempe | 34 | 34 | 37 | 41 | 47 |
| FS (facteur solaire) | 48 | 47 | 47 | 47 | 46 |

Les résultats reportés dans le tableau 1 ci-dessus indiquent que les principales propriétés optiques et thermiques (contrôle solaire) ne varient sensiblement pas par l'incorporation dans l'alliage NiCu d'une quantité mineure de chrome.
Pour vérifier les résistances chimiques des couches fonctionnelles déposées selon les exemples précédents, on a mesuré, la résistance aux acides des vitrages précédemment décrits par le test $SO_2$ selon les conditions décrites dans la norme EN1096-2 (01/2001), annexe C.
L'émissivité normale de l'empilement est mesurée avant de commencer le test puis après 35 cycles de tests. On mesure ainsi une variation de l'émissivité $\Delta\varepsilon_N$, donné dans le tableau 2 ci-dessous en pourcentages.
Dans le système colorimétrique L*, a*, b* et sous incidence normale, la variation de couleur du vitrage en transmission, à l'issue du traitement acide (35 cycles), a été quantifiée en utilisant la grandeur ΔE classiquement utilisée dans le système international L*, a*, b* et définie par la relation:

$$\Delta E = \sqrt{\left(\Delta a^*\right)^2 + \left(\Delta b^*\right)^2 + \left(\Delta L^*\right)^2}$$

Les mesures sont effectuées à partir d'un spectromètre Minolta iso 1175.

Les valeurs des mesures effectuées sur les différents échantillons après les 35 cycles du test $SO_2$ sont regroupées dans le tableau 2 ci-dessous :

Tableau 2

|  | Exemple 1 | Exemple2 | Exemple3 | Exemple4 | Exemple5* |
|---|---|---|---|---|---|
| Couche fonctionnelle | $Ni_{80}Cu_{20}$ | $Ni_{80}Cu_{19}Cr_1$ | $Ni_{76}Cu_{18}Cr_6$ | $Ni_{73}Cu_{17}Cr_{10}$ | $Ni_{75}Cu_{16}Mo_9$ |
| $\Delta\varepsilon_N$ (%) | 1 | 0,6 | 0,2 | 0,2 | 5,2 |
| $\Delta E$ | 2,7 | 1, 6 | 0,9 | 1, 1 | 8, 1 |
| * interrompu au bout de 25 cycles $SO_2$ | | | | | |

Le test $SO_2$ de durabilité aux attaques acides précédent montre la supériorité des empilements selon l'invention, comprenant un alliage de nickel, de cuivre et de chrome. En particulier, on démontre que l'incorporation de chrome dans l'alliage NiCu initial permet de réduire considération les variations d'émissivité et de coloration du vitrage dans des environnements acides, permettant de garantir leur propriétés initiales sur une grande période, quelques soient les conditions d'utilisation, notamment en extérieur.

Les propriétés de résistance mécanique des vitrages munis des empilements ont également été mesurées sur les échantillons des exemples 1 à 5 précédents.

Le test pratiqué est un test Taber sur les vitrages traités thermiquement des exemples 1 à 4 précédents.

Le test Taber mesure la résistance à l'abrasion de la surface du vitrage sur laquelle l'empilement de couches a été déposé. Un abrasimètre 5135 Abraser de chez Taber industry fait subir au revêtement un frottement continu à l'aide d'un disque abrasif. Plus précisément, on fait faire tourner une meule abrasive de grade CS10F, avec application d'une force de 4,9N (500 g) sur la surface du vitrage à évaluer. Après 1000 tours, les vitrages sont récupérés et on évalue la résistance mécanique de la surface testée par la variation de la transmission lumineuse et la variation du flou avant et après le test.

La transmission lumineuse est mesurée selon les normes décrites précédemment.

Par flou, mesuré en pourcentage, il est entendu au sens de la présente invention la perte par diffusion de la lumière, c'est-à-dire de façon classique le rapport entre la partie diffusée de la lumière (fraction diffuse ou Td) sur la lumière directement transmise au travers du vitrage ($T_L$), généralement exprimée en pourcentages. La transmission diffuse mesure ainsi la fraction lumière diffusée par la couche déposée à la surface du substrat de verre. Le flou est classiquement mesuré par des techniques de spectroscopie, l'intégration sur tout le domaine du visible (380-780 nm) permettant la détermination de la transmission normale TL et de la transmission diffuse Td. Une telle mesure est obtenue par l'utilisation d'un Hazemeter. L'appareil utilisé est un dispositif « Haze-Gard ®» commercialisé par la société BYK-Gardner.

Les résultats obtenus sont reportés dans le tableau 3 ci-dessous :

Tableau 3

| Exemple | Couche fonctionnelle | Taber 1000 cycles | |
|---|---|---|---|
|  |  | $\Delta T_L$ | $\Delta$Flou |
| 1 | $Ni_{80}Cu_{20}$ | 3,1 | 4,0 |
| 2 | $Ni_{80}Cu_{19}Cr_1$ | 2 | 5,8 |
| 3 | $Ni_{76}Cu_{18}Cr_6$ | 0,8 | 5,0 |
| 4 | $Ni_{73}Cu_{17}Cr_{10}$ | 0,5 | 3,9 |

Les résultats reportés dans le tableau 3 ci-dessus démontrent la résistance à la friction des empilements selon l'invention, notamment vis-à-vis de l'empilement de référence selon l'exemple 1.

**Revendications**

1. Vitrage à propriété de contrôle solaire comprenant au moins un substrat verrier sur lequel est déposé un empilement de couches, ledit empilement comprenant au moins une couche constituée dans un alliage comprenant du nickel, du cuivre et du chrome, alliage dans lequel le pourcentage atomique de nickel est supérieur à 70% et inférieur à 94%, le pourcentage atomique de cuivre est supérieur à 5% et inférieur à 25% et dans lequel le pourcentage atomique de chrome est supérieur à 1% et inférieur à 15% et dans lequel ledit empilement ne comprend pas de couches argent, or ou platine autrement que sous forme d'impuretés inévitables.

2. Vitrage selon la revendication précédente, dans lequel le pourcentage atomique du cuivre est supérieur au pourcentage atomique du chrome d'au moins 3%.

3. Vitrage selon l'une des revendications précédentes, dans lequel le pourcentage atomique du cuivre dans l'alliage est compris entre 5% et 15%.

4. Vitrage selon l'une des revendications précédentes, dans lequel le pourcentage atomique du Nickel dans l'alliage est compris entre 75% et 90%.

5. Vitrage selon l'une des revendications précédentes, dans lequel le pourcentage atomique du chrome dans l'alliage est compris entre 2% et 10%.

6. Vitrage selon l'une des revendications précédentes, dans lequel l'épaisseur de ladite couche fonctionnelle est comprise entre 5 et 25 nanomètres.

7. Vitrage selon l'une des revendications précédentes, dans lequel l'alliage est constitué essentiellement de nickel, de cuivre et de chrome.

8. Vitrage selon l'une des revendications précédentes, dans lequel l'alliage ne comprend pas d'hétéroatome tel que l'azote, l'oxygène ni de carbone.

9. Vitrage selon l'une des revendications précédentes, dans lequel l'empilement comprend la succession des couches suivantes, à partir de la surface du substrat verrier:

   - une ou plusieurs couches inférieures de protection de la couche fonctionnelle contre la migration des ions alcalins issus du substrat verrier, à base d'un oxyde, d'un nitrure ou d'un oxynitrure, d'épaisseur géométrique, au total, comprise entre 5 et 150 nm,
   - une couche fonctionnelle constituée par ledit alliage,
   - une ou plusieurs couches supérieures de protection de la couche fonctionnelle contre l'oxygène de l'air, notamment lors d'un traitement thermique tel qu'une trempe ou un recuit, à base d'un oxyde, d'un nitrure ou d'un oxynitrure, la ou lesdites couches étant d'épaisseur géométrique, au total, comprise entre 5 et 150 nm.

10. Vitrage selon la revendication précédente, dans lequel la ou les couches de protection inférieures et supérieures sont choisies parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$.

11. Vitrage selon l'une des revendications précédentes dans lequel l'empilement comprend la succession des couches suivantes, à partir de la surface du substrat verrier :

   - une couche inférieure d'épaisseur comprise entre 5 et 150 nm, de préférence entre 30 et 70 nm, de nitrure de Silicium éventuellement dopé par Al, Zr, B ou de le nitrure d'aluminium AlN,
   - une couche fonctionnelle constituée par ledit alliage,
   - une couche supérieure d'épaisseur comprise entre 5 et 150 nm, de préférence entre 30 et 70 nm, de nitrure de Silicium éventuellement dopé par Al, Zr, B ou de nitrure d'aluminium AlN.

12. Vitrage selon l'une des revendications précédentes, dans lequel l'empilement comprend au moins deux couches fonctionnelles constituées par ledit alliage comprenant ou constitué par du nickel, du cuivre et du chrome, chacune desdites couches étant séparée dans l'empilement de la suivante par au moins une couche intermédiaire d'un matériau diélectrique.

13. Vitrage selon la revendication précédente, dans lequel ladite couche intermédiaire comprend au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$.

14. Vitrage selon la revendication précédente, dans lequel l'empilement comprend la succession des couches suivantes, à partir de la surface du substrat verrier :

   - une couche inférieure d'épaisseur comprise entre 5 et 150 nm, de préférence entre 30 et 70 nm, de nitrure de Silicium éventuellement dopé par Al, Zr, B ou le nitrure d'aluminium AlN,
   - une première couche fonctionnelle constituée essentiellement par ledit alliage comprenant ou constituée essentiellement par du nickel, du cuivre et du chrome,
   - une couche intermédiaire d'épaisseur comprise entre 5 et 150 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane non dopé $TiO_2$, les oxynitrures de silicium $SiO_xN_y$, de préférence de nitrure de silicium éventuellement dopé,
   - une deuxième couche fonctionnelle constituée essentiellement par ledit alliage comprenant ou constituée essentiellement par du nickel, du cuivre et du chrome,
   - une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

15. Vitrage selon l'une des revendications précédentes dans lequel l'empilement comprend en outre des couches protectrices d'un métal choisi dans le groupe constitué par Ti, Mo, Al ou d'un alliage comprenant au moins l'un de ces éléments, ou encore des couches protectrices d'un alliage de nickel et de chrome, lesdites couches étant disposées au contact et au dessus et au dessous de la ou des couches fonctionnelles, chaque couche protectrice ayant une épaisseur géométrique comprise entre environ 1 nm et environ 5 nm.

**Patentansprüche**

1. Verglasung mit Sonnenschutzeigenschaft, die mindestens ein Glassubstrat umfasst, auf dem eine Stapelung Schichten abgeschieden ist, wobei die Stapelung mindestens eine Schicht aus einer Legierung umfasst, die Nickel, Kupfer und Chrom umfasst, wobei in der Legierung der Atomprozentsatz von Nickel größer als 70 % und kleiner als 94 % ist, der Atomprozentsatz von Kupfer größer als 5 % und kleiner als 25 % ist und wobei der Atomprozentsatz von Chrom größer als 1 % und kleiner als 15 % ist und wobei die Stapelung keine Silber-, Gold- oder Platinschichten umfasst, außer in Form von unvermeidbaren Verunreinigungen.

2. Verglasung nach dem vorstehenden Anspruch, wobei der Atomprozentsatz von Kupfer um mindestens 3 % größer ist als der Atomprozentsatz von Chrom.

3. Verglasung nach einem der vorstehenden Ansprüche, wobei der Atomprozentsatz von Kupfer in der Legierung zwischen 5 % und 15 % liegt.

4. Verglasung nach einem der vorstehenden Ansprüche, wobei der Atomprozentsatz von Nickel in der Legierung zwischen 75 % und 90 % liegt.

5. Verglasung nach einem der vorstehenden Ansprüche, wobei der Atomprozentsatz von Chrom in der Legierung zwischen 2 % und 10 % liegt.

6. Verglasung nach einem der vorstehenden Ansprüche, wobei die Dicke der Funktionsschicht zwischen 5 und 25 Nanometern liegt.

7. Verglasung nach einem der vorstehenden Ansprüche, wobei die Legierung im Wesentlichen aus Nickel, Kupfer und Chrom besteht.

8. Verglasung nach einem der vorstehenden Ansprüche, wobei die Legierung kein Heteroatom wie Stickstoff, Sauerstoff noch Kohlenstoff enthält.

9. Verglasung nach einem der vorstehenden Ansprüche, wobei die Stapelung die Abfolge folgender Schichten, ausgehend von der Oberfläche des Glassubstrats, umfasst:

- eine oder mehrere untere Schichten zum Schutz der Funktionsschicht gegen die Migration von Alkaliionen, die aus dem Glassubstrat stammen, auf Basis eines Oxids, eines Nitrids oder eines Oxynitrids von einer geometrischen Gesamtdicke zwischen 5 und 150 nm,
- eine Funktionsschicht, die aus der Legierung besteht,
- eine oder mehrere obere Schichten zum Schutz der Funktionsschicht gegen Luftsauerstoff, insbesondere während einer Wärmebehandlung wie einem Härten oder einem Glühen, auf Basis eines Oxids, eines Nitrids oder eines Oxynitrids, wobei die Schicht oder die Schichten von einer geometrischen Gesamtdicke zwischen 5 und 150 nm sind.

10. Verglasung nach dem vorstehendem Anspruch, wobei die untere(n) und obere(n) Schutzschicht(en) ausgewählt sind aus Siliciumnitrid, das möglicherweise mit Al, Zr, B dotiert ist, Aluminiumnitrid AlN, Zinnoxid, einem Mischoxid von Zink oder Zinn $Sn_yZn_zO_x$, Siliciumoxid $SiO_2$, undotiertem Titanoxid $TiO_2$, Siliciumoxynitriden $SiO_xN_y$.

11. Verglasung nach einem der vorstehenden Ansprüche, wobei die Stapelung die Abfolge folgender Schichten, ausgehend von der Oberfläche des Glassubstrats, umfasst:

- eine untere Schicht von einer Dicke zwischen 5 und 150 nm, vorzugsweise zwischen 30 und 70 nm, aus Siliciumnitrid, das möglicherweise mit Al, Zr, B dotiert ist, oder aus Aluminiumnitrid AlN,
- eine Funktionsschicht, die aus der Legierung besteht,
- eine obere Schicht von einer Dicke zwischen 5 und 150 nm, vorzugsweise zwischen 30 und 70 nm, aus Siliciumnitrid, das möglicherweise mit Al, Zr, B dotiert ist, oder aus Aluminiumnitrid AlN.

12. Verglasung nach einem der vorstehenden Ansprüche, wobei die Stapelung mindestens zwei Funktionsschichten umfasst, die aus der Legierung bestehen, die Nickel, Kupfer und Chrom umfasst oder daraus besteht, wobei jede der Schichten in der Stapelung von der folgenden durch mindestens eine Zwischenschicht aus einem dielektrischen Material getrennt ist.

13. Verglasung nach dem vorstehenden Anspruch, wobei die Zwischenschicht mindestens eine Schicht aus einem Material umfasst, das ausgewählt ist aus Siliciumnitrid, das möglicherweise mit Al, Zr, B dotiert ist, Aluminiumnitrid AlN, Zinnoxid, einem Mischoxid von Zink oder Zinn $Sn_yZn_zO_x$, Siliciumoxid $SiO_2$, undotiertem Titanoxid $TiO_2$, Siliciumoxynitriden $SiO_xN_y$.

14. Verglasung nach dem vorstehenden Anspruch, wobei die Stapelung die Abfolge folgender Schichten, ausgehend von der Oberfläche des Glassubstrats, umfasst:

- eine untere Schicht von einer Dicke zwischen 5 und 150 nm, vorzugsweise zwischen 30 und 70 nm, aus Siliciumnitrid, das möglicherweise mit Al, Zr, B dotiert ist, oder aus Aluminiumnitrid AlN,
- eine erste Funktionsschicht, die im Wesentlichen aus der Legierung besteht, die Nickel, Kupfer und Chrom umfasst oder im Wesentlichen daraus besteht,
- eine Zwischenschicht von einer Dicke zwischen 5 und 150 nm, die mindestens eine Schicht aus einem Material umfasst, das ausgewählt ist aus Siliciumnitrid, das möglicherweise mit Al, Zr, B dotiert ist, Aluminiumnitrid AlN, Zinnoxid, einem Mischoxid von Zink oder Zinn $Sn_yZn_zO_x$, Siliciumoxid $SiO_2$, undotiertem Titanoxid $TiO_2$, Siliciumoxynitriden $SiO_xN_y$, vorzugsweise Siliciumnitrid, das möglicherweise dotiert ist,
- eine zweite Funktionsschicht, die im Wesentlichen aus der Legierung besteht, die Nickel, Kupfer und Chrom umfasst oder im Wesentlichen daraus besteht,
- eine obere Schicht von einer Dicke zwischen 5 und 150 nm, vorzugsweise zwischen 30 und 70 nm, aus Siliciumnitrid, das möglicherweise mit Al, Zr, B dotiert ist, oder aus Aluminiumnitrid AlN.

15. Verglasung nach einem der vorstehenden Ansprüche, wobei die Stapelung ferner Schutzschichten aus einem Metall, ausgewählt aus der aus Ti, Mo, Al bestehenden Gruppe oder aus einer mindestens eines dieser Elemente umfassenden Legierung, oder auch Schutzschichten aus einer Legierung aus Nickel und Chrom umfasst, wobei die Schichten in Kontakt mit und über und unter der oder den Funktionsschichten angeordnet sind, wobei jede Schutzschicht eine geometrische Dicke zwischen etwa 1 nm und etwa 5 nm aufweist.

**Claims**

1. A glazing having a solar control property comprising at least one glass substrate on which a stack of layers is deposited, said stack comprising at least one layer consisting of an alloy comprising nickel, copper and chromium, in which alloy the atomic percentage of nickel is greater than 70% and less than 94%, the atomic percentage of copper is greater than 5% and less than 25% and in which the atomic percentage of chromium is greater than 1% and less than 15% and wherein said stack doesn't comprise silver, gold or platinum other than in the form of unavoidable impurities.

2. The glazing as claimed in the preceding claim, in which the atomic percentage of copper is greater than the atomic percentage of chromium by at least 3%.

3. The glazing as claimed in either of the preceding claims, in which the atomic percentage of copper in the alloy is between 5% and 15%.

4. The glazing as claimed in one of the preceding claims, in which the atomic percentage of nickel in the alloy is between 75% and 90%.

5. The glazing as claimed in one of the preceding claims, in which the atomic percentage of chromium in the alloy is between 2% and 10%.

6. The glazing as claimed in one of the preceding claims, in which the thickness of said functional layer is between 5 and 25 nanometers.

7. The glazing as claimed in one of the preceding claims, in which the alloy is essentially made of nickel, of copper and of chromium.

8. The glazing as claimed in one of the preceding claims, in which the alloy does not comprise a heteroatom, such as nitrogen or oxygen, or carbon.

9. The glazing as claimed in one of the preceding claims, in which the stack comprises the sequence of the following layers, starting from the surface of the glass substrate:

    - one or more lower layers for protection of the functional layer from the migration of the alkali metal ions resulting from the glass substrate, with a geometric thickness, in total, of between 5 and 150 nm,
    - a functional layer consisting of said alloy,
    - one or more upper layers for protection of the functional layer from atmospheric oxygen, in particular during a heat treatment, such as a tempering or an annealing, said layer or layers having a geometric thickness, in total, of between 5 and 150 nm.

10. The glazing as claimed in the preceding claim, in which the lower and upper protective layer or layers are chosen from silicon nitride optionally doped with Al, Zr, B, aluminum nitride AlN, tin oxide, a mixed zinc tin oxide $Sn_yZn_zO_x$, silicon oxide $SiO_2$, undoped titanium oxide $TiO_2$ or silicon oxynitrides $SiO_xN_y$.

11. The glazing as claimed in one of the preceding claims, in which the stack comprises the sequence of the following layers, starting from the surface of the glass substrate:

    - a lower layer with a thickness of between 5 and 150 nm, preferably between 30 and 70 nm, of silicon nitride optionally doped with Al, Zr, B or of aluminum nitride AlN,
    - a functional layer consisting of said alloy,
    - a n upper layer with a thickness of between 5 and 150 nm, preferably between 30 and 70 nm, of silicon nitride optionally doped with Al, Zr, B or of aluminum nitride AlN.

12. The glazing as claimed in one of the preceding claims, in which the stack comprises at least two functional layers consisting of said alloy comprising or consisting of nickel, of copper and of chromium, each of said layers being separated in the stack from the following layer by at least one intermediate layer of a dielectric material.

13. The glazing as claimed in the preceding claim, in which said intermediate layer comprises at least one layer of a material chosen from silicon nitride optionally doped with Al, Zr, B, aluminum nitride AlN, tin oxide, a mixed zinc tin oxide $Sn_yZn_zO_x$, silicon oxide $SiO_2$, undoped titanium oxide $TiO_2$ or silicon oxynitrides $SiO_xN_y$.

14. The glazing as claimed in the preceding claim, in which the stack comprises the sequence of the following layers, starting from the surface of the glass substrate:

- a lower layer with a thickness of between 5 and 150 nm, preferably between 30 and 70 nm, of silicon nitride optionally doped with Al, Zr, B or of aluminum nitride AlN,
- a first functional layer essentially composed of said alloy comprising or essentially composed of nickel, of copper and of chromium,
- an intermediate layer with a thickness of between 5 and 150 nm comprising at least one layer of a material chosen from silicon nitride optionally doped with Al, Zr, B, aluminum nitride AlN, tin oxide, a mixed zinc tin oxide $Sn_yZn_zO_x$, silicon oxide $SiO_2$, undoped titanium oxide $TiO_2$ or silicon oxynitrides $SiO_xN_y$, preferably optionally doped silicon nitride,
- a second functional layer essentially composed of said alloy comprising or essentially composed of nickel, of copper and of chromium,
- an upper layer with a thickness of between 5 and 150 nm, preferably between 30 and 70 nm, of silicon nitride optionally doped with Al, Zr, B or of aluminum nitride AlN.

15. The glazing as claimed in one of the preceding claims, in which the stack additionally comprises protective layers of a metal chosen from the group consisting of Ti, Mo and Al or of an alloy comprising at least one of these elements, or also protective layers of an alloy of nickel and of chromium, said layers being positioned in contact with and above and below the functional layer or layers, each protective layer having a geometric thickness of between approximately 1 nm and approximately 5 nm.

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0121540 A
- EP 747329 B2
- EP 067257 A1
- GB 1309881 A
- WO 2013057425 A
- WO 2011090784 A